# EUROPEAN PATENT APPLICATION

(11) **EP 4 299 544 A1**
(43) Date of publication of application: **03.01.2024**
(21) Application number: 22182068.1
(22) Date of filing: 29.06.2022
(51) Int. Cl.: C04B 20/02, C04B 28/02

(54) **A METHOD AND INSTALLATION FOR RECYCLING FIBER CEMENT WASTE MATERIALS**

(71) Applicant: Etex Services NV, 1880 Kapelle-op-den-Bos (BE)
(72) Inventor: MAREELS, Joyce, 1880 Kapelle-op-den-Bos (BE); WANTE, Steven, 1880 Kapelle-op-den-Bos (BE)
(74) Representative: Etex Services NV - Etex IPSC

(57) **Abstract**

The method and installation are capable of obtaining a cement powder having fiber concentrations in accordance with the above-cited requirements, i.e. below 2wt%. The method comprises providing millimetre-sized granules originating from waste fiber cement material. The granules are supplied to a roller/classifier mill (10) comprising a rotating horizontal grinding track (13) and one or more rollers (12) configured to rotate about stationary rotation axes so that the granules are ground between the grinding track (13) and a lateral surface of the rotors (12). The roller/classifier mill further comprises an air classifier (14) arranged above the one or more rotors.

In the roller/classifier mill (10), the granules are reduced to micrometre-sized particles which are small enough to separate from the fibers. Said smaller-sized particles together with the cement-free fibers are separated from heavier particles in the air classifier (14) and removed from the mill by an upward air flow through an outlet (16). Following this, the smaller-sized particles are separated from the majority of the cement-free fibers in a sieve (20), and obtained as the end product, which is a cementitious powder with very low fiber concentration.

## Description

### Field of the Invention

The present invention is related to the processing of fiber cement material, in particular the processing of fiber cement waste products for recycling purposes.

### State of the art.

Fiber cement is an important building material. Whereas asbestos fibers were used in the past, these have been replaced by carbon-based fibers for well-documented health reasons. Cellulose fibers are a much-used type of carbon-based fibers applied in the fabrication of fiber cement products, for example in autoclave-cured fiber cement products. Other types of carbon-based fibers include polyvinyl alcohol (PVA) fibers and polypropylene (PP) fibers, which are commonly used in air-cured fiber cement. Polyethylene (PE) fibers may be also be used in combination with any of the above.

Waste fiber cement material is available in large quantities, not only from used and replaced products, but also and even primarily as a by-product from the production techniques of new products, such as the cutting of newly produced fiber cement panels.

Therefore, recycling of such waste fiber cement material has been investigated before. In order to be feasible for reuse, the waste material, typically in the form of plates or larger pieces, is to be crushed first and then to be pulverized. JP2004-217482A1 discloses a method wherein the resulting powder has a particle size (median diameter) in the range of 10-35 µm. The waste material is therein treated in a primary pulverization step with a hammer mill, which is followed by a secondary crushing step with a roller mill. The material is then subjected to air classification, and fiber components are removed by a sieve after air classification. No further details are disclosed for the method.

The resulting powder is used for manufacture of a low-density product, with a density between 1.0 and 1.1 kg/dm³. Thereto, a slurry comprising cement, fly ash, silicone stone and short and long fiber pulp (i.e. cellulose) and 5% of the recycled powder was prepared into a sheet. The excavated sheet was pressure-molded at 3 MPa, and thereafter first pre-cured and then autoclave-cured.

However, low-density products are typically used for ceilings. They do not have the required performance for façade panels, flooring applications and/or roofing applications, for which medium- and high-density boards are used. The reported tensile strength is in the range of 4.5-5.3 MPa, which is well below the requirements for façade panels, flooring applications and/or roofing applications. It is furthermore not apparent from the data that the recycled material could be used for more demanding applications.

In fact, JP2006-23624A1 is a subsequent patent publication from the same inventors, which includes comments on the product quality of the recycled powder disclosed in JP2004-217482A1. It is stated in [0005] that the fiber component and the solid component are often in an entangled state in the pulverized product, and that it is difficult to separate them completely. This would lead to an apparently large particle size due to the protrusion of the organic fibers. As a consequence, the particle size of the pulverized product varies, and the desired performance is imparted to the newly made product including same pulverized product ([0006]). The disclosed solution to this product resides in subjecting the pulverized product to a heat treatment for burning and removing the organic fibers ([0016]). This solution evidently has other disadvantages, including use of energy, treatment of air including any removal products, as well as potential changes to the cement matrix due to the exposure to a high temperature, preferably in the range of 450 to 500°C. It is known that hardened (air-cured) cement looses hydratation water with increasing temperature. Calcium hydroxide for instance looses its hydratation water from 400°C onwards. Furthermore the Calcium hydroxide and Calcium Silicate Hydrates (CSH) may degrade, leading to loss of strength. For air-cured fiber cement such CSH includes 2Ca.O.SiO2. For autoclave-cured fiber cement, the CSH for instance includes tobermorite.

As a consequence, there is a need for an improved method of recycling fiber cement waste, wherein particularly fibers can be removed from the cementitious powder, and this not just in an experiment but on industrial scale. More particularly, the cementitious powder should be feasible of reuse into medium-density and high-density fiber cement products. It should furthermore be suitable for a feed that predominantly consists of high-density fiber cement material.

### Summary of the invention

It is therefore a first object of the invention to provide a method for processing fiber cement waste material into cementitious powder with a reduced fiber content relative to the waste material, that does not have the disadvantages of the prior art

It is a second object of the invention to provide an apparatus for processing fiber cement waste material into cementitious powder.

It is a third object of the present invention to provide cementitious powder with a reduced fiber content and without entangled fibers without reduction or degradation of Calcium Silicate Hydrates in the cement.

It is a further object of the present invention to provide use of said cementitious powder, for instance for fiber cement products or for concrete products.

According to a first aspect, the invention relates to a method for processing fiber cement waste materials into cementitious powder with an organic carbon content of less than 2% by weight, comprising the steps of :
supplying crushed material originating from fiber cement waste material to a micronizing apparatus, comprising a vertical roller mill in a milling chamber; means for generating an upward airflow through the milling chamber; an air classifier arranged above said vertical roller mill in said milling chamber, and an outlet downstream of said air classifier;
grinding the crushed material in the vertical roller mill to thereby reduce size of at least a portion of the crushed material without corresponding size reduction of the fibers embedded in said crushed material, therewith generating cementitious particles and bringing said fibers at least partially to an outside of said cementitious particles,
removing material from the vertical roller mill by means of the upwards air flow, wherein fibers get liberated from said cementitious particles during grinding, said upwards airflow and/or any subsequent impact within the milling chamber;
separating in the air classifier the cementitious particles into a fraction of larger particles and a fraction of smaller particles, the larger particles being re-supplied into the milling chamber to the roller mill, while a mixture of said smaller particles and liberated fibers is ejected through the outlet,
separating said ejected mixture to separate the fibers from the cementitious particles, therewith obtaining said cementitious powder.

The inventors have obtained surprisingly good results for the process using a vertical roller mill in combination with an air flow through the milling chamber that removes ground particles and fibers toward an air classifier at the top of the milling chamber. Thereafter, fibers may be separated out of the mixture. The grinding in the vertical mill is therein tuned as to be performed to a limited extent only. Rather than milling the crushed material completely, the process will merely break open the crushed material. The fibers are not or not significantly milled down. Particularly, use is made of a grinding process that is based on rolling and thus grinding material by compression force instead of an impact-based milling.

The breaking of the crushed material may liberate some fibers. However, a further fraction of fibers will just be exposed to an outside of generated particles. It is however in the subsequent process steps of removal of the particles by means of the air flow and/or impact of the flowing particles to the air classifier and/or a wall of the milling chamber, that the full liberation of fibers from the cement particles is effected. The size reduction of fibers in the process is in the order of 200-500 µm down to 100-200µm. The size reduction of cement material is roughly in the order of 5-15 mm down to 2-100 µm, preferably with more than 90 wt% in the range of 5-80 µm or even 10-60 µm, and a median (d50) in the range of 10-40 µm, for instance 20-30 µm. The settings of the vertical roller mill are specified in order to achieve such a particle size distribution.

In the air-classifier, the coarser particles will be rejected and drop down back to the vertical milling. Finer particles as well as liberated fibers will pass the air classifier. It is observed herein, that the fibers have a length that may exceed the size limits of the air classifier, and hence may be considered as part of the coarser fraction. However, in view of their shape and elasticity, also the comparatively long fibers were found to pass the air classifier. These comparatively long fibers are subsequently removed from the fraction of finer particles in the second separation step, which preferably is a sieving step.

In one advantageous embodiment of the invention, the air flow through the milling chamber is a heated air flow. Such a heated air flow facilitates drying of the fibers. Such drying is deemed beneficial to reduce adhesion of hydrophilic fibers to the cement particle surface. Examples of such hydrophilic fibers are cellulose fibers and PVA fibers. In one specific implementation the milling chamber was heated to a temperature in the range of 70-90°C. Herein, the air flow itself was brought to a higher temperature.

In another advantageous embodiment, the vertical roller mill comprises a rotating horizontal grinding track and one or more rollers configured to rotate about stationary rotation axes so that the crushed material is ground between the grinding track and a lateral surface of the rotors. The mill may further comprise a rotating table. Preferably the lateral surface of the rollers s a conical surface. The roller is thus tapered and its axis may include an angle with the grinding track in the range of 0-30 degrees, for instance 10-20 degrees. The rollers are actively rotated about their respective rotation axes and pressed against the rotating table, while the crushed material is supplied to spaces between the rotors and the rotating grinding track, to thereby crack and further reduce the size of the crushed material.

In again a further embodiment, the air classifier is a gravitational air classifier. Herein, coarse particles are conveyed by gravity through a valve at the bottom of the air classifier, and fine material is conveyed by air to a fabric filter. The air classifier may have an internal chamber, from which coarser material is rejected by means of the centrifugal force into an annular gap. This would allow then to be flow down. However, under this force, further fibers may be liberated from the cementitious particles without falling back into the vertical mill and being milled down. The size of the coarser material to be rejected is for instance in the range of 100-200 µm, such as 130-170 µm, for instance 150 µm.

In a further advantageous embodiment of the invention, the crushed material has a particle size (as defined by a median diameter) in the range of 2 mm to 10 cm, preferably in the range of 3 mm to 5 cm, such as in the range of 5 mm to 3 cm. In this manner, the particle size of the crushed material is such that the fibers remain predominantly within the individual pieces of the crushed material. Hence, the crushing does not reduce the length of the fibers more than necessary to reach appropriate feed for the vertical roller mill.

In one preferred implementation, the method further comprises the step of crushing waste material into crushed material prior to the communition and fiber separation. The in-situ crushing of waste material provides the benefit that some detection steps may be performed, so as to remove undesired or harmful elements. Additionally, this ensures that the crushed material has the preferred size as specified hereinabove. In an even further implementation, the step of crushing waste material comprises a first step to break down waste material into lumped material and a second step to break down said lumped material into crushed material. The first step may for instance be performed by means of a shredder. The second step may further instance be performed by means of a hammer mill, although other known milling techniques are not excluded. As used herein, lumped material is material that has a macroscopic size, for instance a diameter in the range of 5 to 25 cm, such as 10 to 15 cm. It will be understood that the exact size is not relevant here. However, the material should be appropriate as feed for the mill used in the second step.

In another preferred implementation, a detection step is performed on the crushed material for removal of harmful and/or undesired materials. Any detected harmful or undesired material may be removed. Known options for removal include valve and a gripper.

One option is the use of a magnetic detection step, which is deemed appropriate for removal of metals. A further and preferred option is an optical detection step, such as detection by means of a camera and subsequent identification of undesired and/or harmful materials. The camera may for instance be chosen to operate with visible light (400-750 nm) or with near infrared (NIR, 750-2000 nm). A combination of both is also feasible. In one specific implementation, the detection step and the detector are configured for detecting polymer ribbons. Such ribbons are in used for certain types of fiber cement such as corrugated sheets. It is deemed preferred to use a detection of NIR-spectroscopy, although other options are not excluded. In a further specific implementation, the detection step is configured for detection of asbestos materials. This may be performed by means of NIR spectroscopy.

Preferably, the detection and removal steps are implemented in an automatic manner, i.e. such that no action from an operator is needed. This is achieved, as known in the art, by a so-called vision steps that makes use of optical detection software. A light source for emission of radiation of a desired wavelength may also be needed, for instance by means of NIR detection.

In again a preferred embodiment, the separation step to remove fibers from the cementitious particles is performed by means of sieving. Preferably sieving is performed with a mesh in the range of 50-200 micrometers, preferably 70-180 µm, more preferably 90-160 µm, for instance 100 µm, 125 µm or 150 µm. The mesh is an optimum between maximum yield on cementitious particles and minimum content of fibers. When using a mesh of 150µm, the fiber content may be reduced to 2% by weight of organic carbon. When using a mesh of 80-100 µm, the fiber content may be further reduced to 1% by weight of organic carbon. The exact carbon content on the resulting cementitious particles will depend on several parameters, including the content of fibers in the waste material, the type of fibers and the size of the crushed material, and the type of sieve. A variety of sieve types is known in the art, including dry sieves, air-jet sieves, sieves supported by means of ultrasonic vibration. A choice is made based on effectiveness of separation and capacity.

In a further implementation, the sieving step may be performed with a plurality of sieves arranged in series, wherein the mesh of a second sieve is reduced as compared to the first sieve. A first sieve for instance has a mesh of 150 µm and a second sieve has mesh of 100 µm. However, other meshes may be chosen and the number of sieves may be larger than two. The one or more intermediate fractions that pass the first sieve but do not pass the last sieve, may then be further processed, for instance by means of a different separation technique, such as a classifier. Such fractions could also be fed back into the milling chamber for renewed separation.

It is one of the further advantages of the present invention that the fibers that are separated in the sieving step may also be reused. One useful way of reusing the fibers is to add those to fiber cement and apply a concomitant reduction of the fresh fiber material in the fiber cement slurry.

Preferably, the resulting cementitious powder has a particle size distribution such that at least 90 % by weight (d90) is smaller 100 µm, a median (d50) is in the range of 10-40 µm, preferably in the range of 15-35 µm, more preferably 20-30 µm. For the avoidance of doubt, the particle size distribution is determined with laser diffraction, using equipment supplied by Malvern Pananalytical and known as Mastersizer^{™} 3000. Such as cementitious powder has been found to be useful for reuse in fiber cement, but also for use in concrete and other building material, as will be discussed in more detail hereinafter. One of the advantages of the cementitious powder is its flow ability, due to the limited amount of fibers and particularly the absence of larger fibers, such as fibers with a length of more than 150µm or even more than 100µm. This flow ability allows to store the cementitious powder in a silo container, and facilitates that the powder may flow out from the bottom without clogging.

The method of the invention has moreover the advantage that the throughput time for the comminution step and the fiber removal is short, for instance when comparing to communition by means of ball mill. This has the further advantage that different batches of fiber cement waste material may be processed by the method of the invention without significant mixing. This is an important advantage, as it allows generating cementitious powders with limited fiber content in batches from a single source, such as a specific fiber cement product and even a fiber cement product in a specific color. As a consequence, when using production waste, a resulting batch of cementitious powder will have a cement composition that is known. Such a batch may then be reused for the production of a single product, typically the same product as from which the waste originates.

The method of the invention has been furthermore feasible for treatment of fiber cement waste on an industrial scale, with feed of waste material in the range of 500-2000 kg/hour, preferably 1000-1800 kg/hour. Higher feed flows are not excluded and may evidently be achieved by addition of equipment.

According to a second aspect, the invention relates to an installation comprising
- an apparatus for crushing waste fiber cement material in which fibers are embedded in a cured cement matrix into crushed material;
- a micronizing apparatus (10) comprising a vertical roller mill in a milling chamber, which uses said crushed material as feed and generating cementitious particles and bringing fibers at least partially to an outside of said cementitious particles; means for generating an upward airflow through the milling chamber for transporting said fibers and said cementitious particles upwards; an air classifier arranged above said vertical roller mill in said milling chamber for separating off a coarser fraction of said cementitious particles and returning them into the milling chamber towards said vertical roller mill, and an outlet downstream of said air classifier, through which a finer fraction of said cementitious particles and liberated fibers are to pass;
- a sieve downstream of said outlet for separating said liberated fibers from said cementitious particles.

This installation is suitable and configured for performing the process of the invention as hereinabove described. The installation is more specifically described by means of the following figure description. Any features described in relation to the process hereinabove or with reference to the figure, are deemed to be specified in combination with the installation as well.

In accordance with one preferred embodiment, the vertical roller mill comprises a rotating horizontal grinding track and one or more rollers configured to rotate about stationary rotation axes while being pressed against the grinding track, so that the crushed material is ground between the grinding track and a lateral surface of the rollers.

In according with another preferred embodiment, material is transported between the specific apparatus in the installation by means of a conveyer belt. The outlet of the micronizing apparatus is preferably coupled to the sieve by means of a channel in which air is used as a carrier for the particles and the fibers. Alternatively, use may be made of a conveyer belt. While referring in the present application to a micronizing apparatus, it is understood that the apparatus actually reduces the size of the fiber cement material in the range of 1-100 micrometer, with a median preferably in the range of 20-30 micrometer.

In according with a third aspect, the invention provides a cementitious powder comprising fibers in an amount of at most 2 % by weight as defined by organic carbon content, wherein the powder has a a particle size distribution such that at least 90 % by weight (d90) is smaller 100 µm, a median (d50) is in the range of 10-40 µm, preferably in the range of 15-35 µm, more preferably 20-30 µm, and wherein said cementitious powder is a cured powder comprising calcium hydroxide and/or calcium silicate hydrates (CSH) in an amount of at least 5% by weight. The said content of both calcium hydroxide and calcium silicate hydrates will be hereinafter referred to as CSH content. The CSH content is more preferably at least 10% by weight, by further preference at least 15% by weight. The CSH content may even be at least 20% by weight. In fact, the CSH content is related to the CSH content in the fiber cement waste material. Due to the removal of fibers, the CSH content will even be higher in the cementitious powder than in the fiber cement waste material. The CSH content may be determined by means of X-ray diffraction analysis (XRDA).

Generally, fiber cement is cured in two different manners, namely air-cured and autoclave cured. As a consequence, the CSH content is distinct. In cementitious powder obtained from air-cured waste material, the CSH content is primarily in the form of calcium hydroxide, typically crystalline, and CSH-gel. As known to a skilled person, a CSH-gel is a material comprising crystallites which however behaves as a gel. In cementitious powder obtained from autoclave-cured waste material, the CSH content will be primarily in the form of tobermorite.

Hence, in one embodiment of the invention, the cementitious powder is an air-cured powder and comprises calcium hydroxide and CSH gel an as the primary CSH. In another embodiment of the invention, the cementitious powder is an autoclave-cured powder and comprises tobermorite.

In a further embodiment of the invention, the cementitious powder comprises fibers in an amount of at most 1 % by weight as defined by organic carbon content.

It has been observed by the inventors in tests leading to the present invention that the cementitious powder of the invention has appropriate flowability. As such it may be stored in a silo and be disposed thereof without a risk of clogging or without significant visco-elastic and rather unpredictable flow behaviour.

The cementitious powder turns out suitable for reuse for fiber cement. Tests have shown that the normalized strength increases in comparison to fiber cement of a corresponding composition without recycled fiber cement. In comparison to fiber cement that was comminuted in line with the process of the invention, but from which the fibers were not removed by sieving, the invention leads to products with a higher Young's modulus, and elastic behaviour up to a higher level.

Preferred manufacturing methods for fiber cement products include Magnani process, flow-on process and the Hatschek process. The Hatschek process is most preferred. More preferably, the cementitious powder is used for the production of fiber cement products, such as fiber cement sheets, with a medium-density or a high density. A medium density fiber cement product is specified as a product with a density in the range of 1.2-1.5 g/cm³. A high density product has a density of at least 1.5 g/cm³, typically 1.5-2.0 g/cm³.

The cementitious powder further turns out suitable for use in the production of concrete. Herein, the CSH-content may contribute to additional strength. Furthermore, due to the removal of a significant portion of the fibers, the water demand decreases when reusing this powder for concrete manufacturing.

The cementitious powder is suitably used in an amount of at least 7 weight%, for instance 10-20 weight% such as the 15 weight% of the illustrated examples. It is however not excluded that the cementitious powder is used in larger amounts for instance from above 20-50 weight%.

### Brief description of the figures

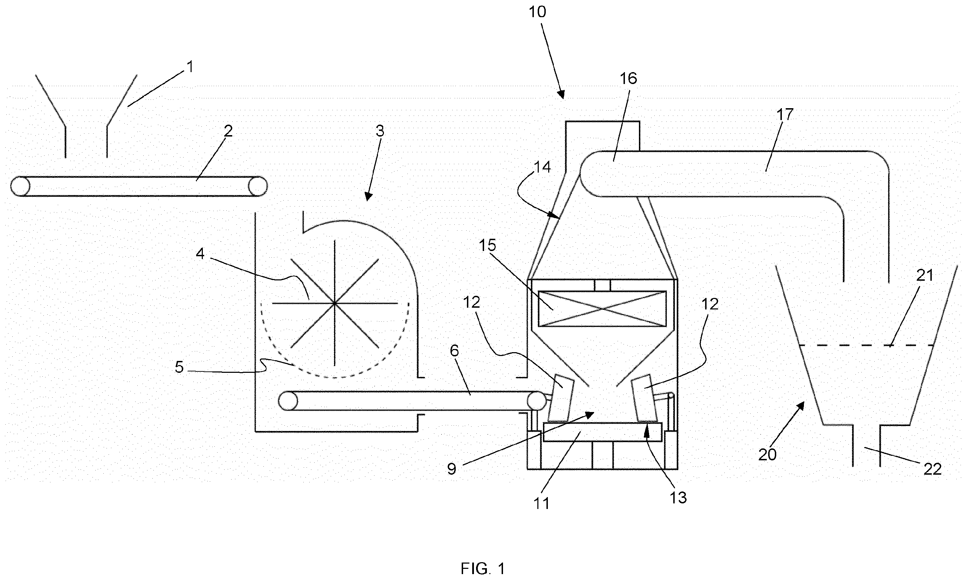

Figure 1 is a conceptual illustration of the various stages of the method according to an embodiment of the invention. The drawing also provides a schematic image of the main components of an installation according to embodiments of the invention.

### Detailed description of preferred embodiments of the invention

The steps of the method and the components of the installation of the invention will be described hereafter in more detail, including possible alternatives included in the protection scope and preferred ranges for a number of parameters. None of the stated details however defines the protection scope unless they are stated also in the independent claims.

The step of crushing raw fiber cement pieces into crushed material granules may be performed in two stages depending on the size of the raw material pieces. In most cases, these pieces will be large to the extent that a shredding stage is required to reduce the material to pieces whose largest dimension is about a few centimetres to 20 cm, hence the term centimetre-sized', or lumped material. A shredder installation as known in the art may be used for this purpose.

With reference to Figure 1, a supply of such lumped material is loaded into a hopper 1 or any other equivalent supply means. These pieces may be produced by a shredder installation (not shown) and supplied continuously or in batches to the hopper 1, from which they are transported on a first conveyor belt 2 to a hammer mill 3, configured to crush the lumped material into crush material of about 3 mm to 5 cm in diameter. Preferably the crushed material is smaller than about 10 mm in diameter. The term 'diameter' is used for indicating the size of the material even though the material pieces are not necessarily spherical in the geometrical sense when regarded on a microscopic scale. On a macroscopic scale however, the material pieces resemble a sphere sufficiently closely so that the diameter can be determined with an accuracy in the order of millimetres (for example, a piece of 5mm in diameter can be distinguished from a piece of 8 mm in diameter). It is preferred that the minimum size is not too small, so as to avoid that fibers would be exposed and/or milled down significantly before entering into the micronizing apparatus.

The hammer mill 3 may be any type of apparatus known in the art and suitable for crushing the lumped material pieces of waste fiber cement material into crushed material of the above-stated size. As illustrated in the drawing, the hammer mill 3 may comprise rotating hammer arms 4 and a sieve 5 that allows granules to pass through the sieve depending on their size. The hammer mill 3 is represented in a very simplified way, but its functioning is well known to the skilled person and need therefore not be described here in detail.

The pieces of the lumped material are still large enough to contain fibers embedded in a solid cement matrix, i.e. the fibers have not been separated from the cement at this stage.

From the hammer mill 3, the crushed material is transported by a second conveyor belt 6 to a micronizing apparatus 10. As shown in the drawing, this apparatus is of a particular type comprising a vertical roller mill in milling chamber 9 and an air classifier 14. The air classifier is arranged at a top of the milling chamber 9. It may include a separate chamber in which a separate is achieved by means of centrifugal forces The shown vertical roller mill comprises a horizontally placed rotatable table 11 and a plurality of rollers 12 positioned so that a lateral surface of the rollers faces a grinding track 13 on the table 11. Preferably the lateral surface of the rollers 12 is a conical surface as shown in the drawing. The rollers 12 are actively rotated about their respective rotation axes and pressed against the rotating table 11, while the material are supplied to the spaces between the rollers 12 and the rotating grinding track 13, to thereby further crush the granules into smaller particles. Mounted above the rotors is an air classifier 14. In the illustrated embodiment, the air classifier 14 comprises a ventilator 15 and separation blades (not shown in detail). Not shown are air inlets at a bottom side of the milling chamber 9 through which air is pushed into the milling chamber to generate an upwards air flow. An outlet duct 17 is coupled to the outlet 16.

In the grinding portion of the vertical roller mill 10, the crushed material is ground between the rollers 12 and the grinding track 13 so that cementitious particles are formed. These particles may be micrometer sized'. The term micrometre sized' refers to the fact that these particles can be regarded as spheres on a microscopic scale with an accuracy in the order of micrometres, i.e. particles of diameter 20 µm are distinguishable from particles of diameter 25µm, 30µm or 40µm.

When these particles have diameters as small as 100 µm or less, they separate from the fibers, the majority of which have a length of about 150 µm to 300 µm when embedded in the cement matrix. It is believed that the use of this type of vertical roller mill and in particular the relatively short residence time of the material in the mill is beneficial in the sense that a majority of the fibers are not broken up by the crushing process. Hence, said majority of fibers are able to separate from the cementitious particles without being broken up into smaller fibers, i.e. the separated fibers are mostly within the length range of about 50µm to 200 µm.

A stream of the separated fibers and particles is then lifted up out of the grinding area by the upward air flow and passes through the blades of the air classifier 14. The classifier is configured to allow only the separate fibers and lighter, finer particles to pass through the blades while coarser particles fall back to the grinding area. Said finer particles largely correspond to the fraction of particles having diameters of about 100 µm or less, i.e. the particles which are essentially free of embedded fibers. The larger particles are grinded again until they too are broken up into smaller particles that separate from the fibers. The mixture of fibers and particles passing through the outlet 16 and into the outlet tube 17 is therefore a mixture that is formed for the most part of unbroken fibers and micrometre-sized cementitious particles.

The sieving step takes place in a sieve 20 comprising a mesh 21 with openings designed to retain the fibers and allow the cementitious particles of diameter 100 µm or less to pass through the mesh and fall through an exit duct 22 from where the particles can be collected as the end product of the method. The mesh openings may for example be circular or equivalent, having a diameter in the order of 60 µm to 200 µm. According to further embodiments, the mesh diameter is in the range between 50µm and 150µm. According to a specific embodiment, the mesh diameter is about 100µm. The sieve 20 may be any type of sieve capable of performing the sieving step as described above. It could for example be a tumbling sieve.

The fact that a majority of the fibers have not been broken up in the grinding area of the roller/classifier mill 10 enables the use of a sieve having the above-identified mesh openings which would not be able to retain a sufficient amount of fiber material if the majority of the fibers is broken up. This is believed to be a key contributor to the ability of the method and installation of the invention to reach superior results in terms of the fiber content in the final product collected in the outlet duct 22 of the sieve 20.

Said final product is a cementitious powder formed of particles having diameters of about 100 µm or less and with a fiber concentration of less than 2wt%, as defined by means of the organic carbon content. According to a first embodiment, the fiber concentration is between 1 and 1.9wt%, or between 1.2 and 1.9wt% or between 1.2 and 1.8wt% or between 1.3 and 1.7wt% or less than 1.5wt% or less than 1.4wt% (all as defined by the organic carbon content). According to a second embodiment, the fiber concentration is reduced to less than 1.4 wt%, more specifically in the range of 0.5-1.4 wt%, for instance 0.5-1.2 wt% or even 0.5-1.0 wt% as defined by the organic carbon content. Determination of organic carbon content is achieved by removal of any inorganic carbon by means of treatment with a sufficiently strong acid, such as phosphoric acid. Thereafter the sample is dried, oxidized and combusted, wherein the flow of CO2 is measured using a non-dispersive infrared detection cell.

The low fiber content enables the use of the powder as a resource for producing new cement or fiber cement products, in other words it enables the full recycling of the original waste products.

According to preferred embodiments, the cementitious particles obtained in the vertical mill are dried before or during their transport to the classifier 14, by heating the mill 10. This may be done by heating the upward air flow that transports the particles towards the classifier 14. According to a preferred embodiment, the mill is heated to a temperature between 70°C and 90°C. This may be realized by heating the air flow to a temperature of about 200°C.

Besides the temperature in the milling chamber 9, the optimization of a number of other parameters has been proven to be beneficial in terms of minimizing the fiber content and obtaining suitably sized particles in the end product. These parameters include the mechanical pressure exerted on the rollers, the supply rate of the millimetre-sized granules into the roller/classifier mill 10, and the air flow velocity in the mill 10.

The method of the invention may be performed as a continuous process, wherein a continuous supply of waste products undergoes the various steps consecutively. This mode is illustrated in Figure 1. Alternatively, the method may be performed in batch mode, wherein a batch of waste products is processed according to each method step, with the end product of each step being transported as a batch of material to the next step.

The invention is equally related to an installation suitable for performing the method of the invention. Such an installation at least comprises a roller/classifier mill 10 of the type described above, and a sieve 20 of any type suitable for separating the fibers from the micrometre-sized cement particles.

In the embodiment shown in Figure 1, the installation further comprises a hammer mill 3 or any equivalent tool capable of performing the same reduction of lumped material pieces of fiber cement waste material to crushed material.

The transport of products from one component to another need not be realized by conveyor belts as shown, but could be done by any other suitable transport means. The installation could additionally include a shredder placed upstream of the hammer mill 3.

According to an embodiment of the method, a colour separation step is added upstream of the micronizing apparatus, i.e. the colour separation is performed on the crushed material. The colour separation step may include a separation tool known as such, for example a tool using a camera system. A corresponding embodiment of the installation of the invention includes said colour separation tool between the hammer mill 3 or its equivalent and the micronizing apparatus 10.

Cementitious powders obtained with the method of the invention have been characterized. Table 1 shows test data obtained with waste material for autoclave-cured fiber cement products. The waste material was cutting waste generated during production of autoclave-cured fiber cement products commercialized by Eternit NV under the trade name tectivaTM. The material was treated by means of the micronizing apparatus as described with reference to Figure 1 hereinabove. The crushed material had a particle size below 5 mm. The material was treated with a vertical roller mill to a size of less than 100 µm. For sake of experiment, samples were taken without sieving, with a sieve of 100 µm mesh and with a sieve of 150 µm mesh. The sieve was an air jet sieve without use of ultrasonic system. Organic carbon content and bulk density were measured using standard method. The particle size distribution was measured using laser diffraction with a Malvern Mastersizer 3000 apparatus.

| | | Before sieving | After sieving using a 150µm sieve | After sieving using a 100µm sieve |
|---|---|---|---|---|
| Cₘ org (m%) | | 3.03 | 2.01 | 1.29 |
| Loose Bulk density (g/dm³) | | 516 | 544 | 567 |
| PSDA | D90 (µm) | 93.3 | 63.0 | 47.1 |
| | D75 (µm) | 40.2 | 33.9 | 29.2 |
| | D50 (µm) | 19.0 | 16.9 | 15.2 |
| | D25 (µm) | 7.1 | 6.7 | 6.1 |
| | D10 (µm) | 2.1 | 2.0 | 1.8 |

It is apparent from the data in this table that the sieving has a significant impact on the organic carbon content. Moreover, the sieve with a mesh of 100 µm results in a significantly lower organic carbon content than that with the sieve of 150 µm.

It is furthermore visible that the resulting particle size distribution is concentrated in the range between 2 and 63 µm (D10 and D90 limits). In the shown example, the median (D50) is between 15 and 20 micrometers. In other examples wherein the crushed material had a somewhat larger size and another vertical roller mill was used, a distribution was obtained, with a D10 of 2.4 µm, a D50 of 24 µm and a D75 between 55 and 60 µm and a D90 in the range of 110-140 µm, using a sieve of 150 µm. Table 2 shows test results for air-cured cementitious powder. The fiber cement waste material was cutting waste from a fiber cement panel commercialized under the name Natura by Eternit NV. Sieving was performed with a sieve with a mesh of 150 µm.

**Table 2**

| | | Before sieving | After sieving using a 150µm sieve |
|---|---|---|---|
| Cₘ org (m%) | | 2.05 | 1.30 |
| PSDA | D90 (µm) | 181.0 | 93.5 |
| | D75 (µm) | 86.2 | 52.2 |
| | D50 (µm) | 35.6 | 21.7 |
| | D25 (µm) | 10.5 | 7.0 |
| | D10 (µm) | 3.1 | 2.2 |

The same trends as perceived for the autoclave-cured material are visible in this table as well. The organic carbon content strongly reduces by sieving, and the particle size distribution ranges from 2 µm (D10) to a 93 µm (D90), thus somewhat below 100 µm. The median is at 22 µm.

Further tests were performed using the cementitious powder as characterized in Table 1. This material was added into a slurry for manufacturing fiber cement. The slurry composition was in accordance with the tectiva plate, with the exception that the amount of Portland cement and silica were reduced and 15% of the cementitious powder was added. The other ingredients were kept the same. The ingredients are shown in Table 3. The indicated amounts are based on dry weight. The test was performed with a composition without any recycling material, with a composition that was merely milled and with a composition that was both milled and sieved, using a 150 µm mesh sieve.

**Table 3 - compositions**

| | Reference | Without sieving | With sieving (150µm) |
|---|---|---|---|
| Cement (m%) | 33.8 | 26.3 | 26.3 |
| Silica (m%) | 35.4 | 27.9 | 27.9 |
| Recycled material (m%) | 0 | 15.0 | 15.0 |
| Cellulose fibers (m%) | 7.6 | 7.6 | 7.6 |
| Other mineral ingredients (m%) | 19.5 | 19.5 | 19.5 |
| Pigment (iron oxide) (m%) | 3.6 | 3.6 | 3.6 |

The slurry was used to manufacture fiber cement sheets using the Hatschek process, using a pilot line (MiniHatschek). The resulting panels had 20 films with a total thickness of 8 mm. They were pressed with a pressure of 230 kg/m² during 10 minutes.

Precuring was performed at room temperature overnight. Subsequently, the panels were cured in an autoclave equipment at 170°C during 12 hours.

The resulting panels were thereafter tested to identify mechanical properties as well as chemical composition, i.e. the organic content and the amount of tobermorite.

**Table 4- test results**

| | Reference | Without sieving | With sieving (150µm) |
|---|---|---|---|
| C_{organic} (m%) | 2.80 | 3.31 | 3.17 |
| E-modulus (MPa)^{∗} | 16.5.10³ | 12.6.10³ | 15.1.10³ |
| dLOP (mm)^{∗} | 0.82 | 0.76 | 0.95 |
| SLOP (MPa)^{∗} | 25.6 | 20.4 | 25.5 |
| dMOR (mm)^{∗} | 1.14 | 1.33 | 1.25 |
| SMOR (MPa)^{∗} | 31.6 | 29.8 | 30.0 |
| iMOR (J/m²)^{∗} | 556 | 601 | 588 |
| Density (g/cm³)^{∗} | 1.60 | 1.50 | 1.50 |
| Moisture content (%)^{∗} | 3.45 | 2.12 | 2.08 |
| MOR/d^{2∗} | 12.36 | 13.30 | 13.33 |
| Tobermorite content (m%) | 17.5 | 24.6 | 25.7 |

The test results show that the organic carbon content increases relative to the fresh product. However, the content is lower for the sieved sample than for the sample without sieving. The total organic carbon content is higher than 2%, in view of the addition of fresh cellulose fibers.

The density of the product reduces due to the addition of the recycled cementitious powder. It has to be taken into account, however, that the amount of fresh cement in the samples with recycled powder is lower. Since the density of cement is higher than that of recycled cementitious powder (which contains around one third cement), this is not a surprise.

The tobermorite content turns out to increase significantly, for 17% up to about 25%. This is clearly an addition of the recycled fiber cement. The increase is more than expected based on the addition of 15% cementitious powder. It is believed that the presence of tobermorite in the cementitious powder may act as nucleating agent for the generation of tobermorite during the autoclave curing. The shown mechanical properties were determined under air-dry conditions. The SLOP is herein the strength value at the limit of proportionality between the strain and the material expansion. Above this value, deformation will be irreversible, therewith damaging the material. The SMOR is the flexural strength determined as the modulus of rupture. The dLOP and the dMOR define the bending at the conditions of SLOP and SMOR. The iMOR is the fracture energy. The MOR/d² is the normalized flexural strength, wherein the SMOR is divided by the square of the density.

It is apparent from Table 4, that the removal of fibers brings the elastic properties (i.e. the elastic modulus and the SLOP) of the product to levels corresponding to the fresh product without any recycled material. This is a beneficial result from the removal of fibers. The dMOR and the iMOR increase relative to fresh material, and the humidity content decreases. The SMOR value decreases slightly (a few percent). However, the normalized flexural strength increases, due to the lower density.

## Claims

1. A method for processing fiber cement waste material into cementitious powder with an organic carbon content of less than 2% by weight, comprising the steps of:
- supplying crushed material originating from fiber cement waste material to a micronizing apparatus (10) comprising:
- a vertical roller mill in a milling chamber;
- means for generating an upward airflow through the milling chamber;
- an air classifier arranged above said vertical roller mill in said milling chamber, and
- an outlet downstream of said air classifier;
- grinding the crushed material in the vertical roller mill to thereby reduce size of at least a portion of the crushed material without corresponding size reduction of the fibers embedded in said crushed material, therewith generating cementitious particles and bringing said fibers at least partially to an outside of said cementitious particles,
- removing material from the vertical roller mill by means of the upwards air flow, wherein fibers get liberated from said cementitious particles during grinding, said upwards airflow and/or any subsequent impact within the milling chamber;
- separating in the air classifier (14) the cementitious particles into a fraction of larger particles and a fraction of smaller particles, the larger particles being re-supplied into the milling chamber to the roller mill, while a mixture of said smaller particles and liberated fibers is ejected through the outlet (16),
- separating said ejected mixture to separate the fibers from the cementitious particles, therewith obtaining said cementitious powder.

2. The method as claimed in claim 1, wherein said grinding step is performed by compression of the crushed material.

3. The method as claimed in any of the claims 1 to 2, wherein said separation of said ejected mixture is performed by sieving with a sieve, wherein the sieve is preferably provided with a mesh of at most 150 micrometer, preferably at most 125 micrometer, and preferably at least 50 micrometer, more preferably at least 75 micrometer.

4. The method according to any of the preceding claims, wherein the cementitious particles and the fibers are dried by means of heating the air flow, wherein the milling chamber is preferably heated to a temperature between 70°C and 90°C.

5. The method according to any one of the preceding claims, further comprising a colour-based separation step prior to entry of the crushed material into the micronizing apparatus

6. The method according to any of the preceding claims, wherein said crushed material is provided out of fiber cement waste material by means of a first size reduction step and a second size reduction step, wherein said first size reduction step results in lumped material and said second size reduction step results in crushed material.

7. The method as claimed in claim 6, further comprising a sorting step in between of the first and the second size reduction step, wherein said sorting step is configured to remove material distinct from fiber cement, for instance a polymer ribbon, and wherein said sorting step preferably comprises a detection step using near infrared spectroscopy.

8. The method as claimed in any of the preceding claims, wherein the cementitious powder has a particle size distribution such that at least 90 % by weight (d90) is smaller 100 µm, a median (d50) is in the range of 10-40 µm, preferably in the range of 15-35 µm, more preferably 20-30 µm.

9. An installation for processing waste fiber cement material, comprising
- an apparatus for crushing waste fiber cement material in which fibers are embedded in a cured cement matrix into crushed material;
- a micronizing apparatus (10) comprising a vertical roller mill in a milling chamber, which uses said crushed material as feed and generating cementitious particles and bringing fibers at least partially to an outside of said cementitious particles; means for generating an upward airflow through the milling chamber for transporting said fibers and said cementitious particles upwards; an air classifier arranged above said vertical roller mill in said milling chamber for separating off a coarser fraction of said cementitious particles and returning them into the milling chamber towards said vertical roller mill, and an outlet downstream of said air classifier, through which a finer fraction of said cementitious particles and liberated fibers are to pass;
- a sieve downstream of said outlet for separating said liberated fibers from said cementitious particles

10. The installation as claimed in claim 9, wherein said vertical roller mill comprises a rotating horizontal grinding track (13), one or more rollers (12) configured to rotate about stationary rotation axes while being pressed against the grinding track, so that the crushed material is ground between the grinding track (13) and a lateral surface of the rollers (12),

11. The installation according to claim 9 or 10, wherein the sieve (20) is configured to separate the fibers from the particles of said mixture by using a mesh (21) with openings configured to allow the passage of a majority of the particles while withholding a majority of the fibers, wherein preferably the mesh (21) has openings whose diameter is between 60 µm and 200 µm or between 50 µm and 150 µm.

12. The installation according to claims 9-11, wherein the means for generating air flow comprise air inlets at a bottom side of the milling chamber, to create said upwards air flow.

13. A cementitious powder comprising fibers in an amount of at most 2 % by weight as defined by organic carbon content, wherein the powder has a a particle size distribution such that at least 90 % by weight (d90) is smaller 100 µm, a median (d50) is in the range of 10-40 µm, preferably in the range of 15-35 µm, more preferably 20-30 µm, and wherein said cementitious powder is a cured powder comprising calcium hydroxide and/or calcium silicate hydrates (CSH) in an amount of at least 5% by weight.

14. The cementitious powder as claimed in claim 13, which is obtainable from the process as claimed in any of the claims 1-8.

15. Use of the cementitious powder as claimed in claim 13 or 14 for the manufacture of fiber cement or concrete, wherein the cementitious powder is preferably used in an amount of at least 7 weight% based on dry weight, more preferably at least 10 weight%, more preferably at least 15 weight%, for instance in the range of 15-40 weight%.
